# EUROPEAN PATENT APPLICATION

(11) **EP 1 798 103 A2**
(43) Date of publication of application: **20.06.2007**
(21) Application number: 06460039.8
(22) Date of filing: 08.11.2006
(51) Int. Cl.: B60P 1/56, B60P 1/273

(54) **Unloading mechanism of discharge flaps in hopper-bottom cars**

(30) Priority: 15.12.2005 PL 37844605
(71) Applicant: Wagony Swidnica SA, 58100 Swidnica (PL)
(72) Inventor: Pazdzierniak, Przemyslaw, 58 160 Swiebodzice (PL); Jarecki, Witold, 58 100 Swidnica (PL); Konstanty, Piotr, 58 100 Swidnica (PL); Kozbial, Stanislaw, 58 100 Swidnica (PL); Studzinski, Dionizy, 58 100 Swidnica (PL)
(74) Representative: Kozlowska, Regina

(57) **Abstract**

The mechanism is provided with a pair of flaps closing a hopper hole, pneumatic actuators for driving the flaps, catches (7) attached to the left flap, hooks (4) mounted to actuator cylinders (8), and a locking unit to secure the flaps in closed position. The left flap is provided with a longitudinal shaft (1) ending in levers (2) that are connected to heads (5) of piston rods of the actuator on each side of the flap. At the end of each lever (2) there is a disc (6), which is mating with a comb flank of a hook (4) cam, while an arm of the lever (2) is placed between right (10) and left (11) stoppers, which are part of the left flap. Flanks of flaps are connected to each other through synchronous couplers (9).
The mechanism is intended for dump cars of the hopper-bottom type.

## Description

The object of the present invention is the air-operated unloading mechanism of discharge flaps in hopper-bottom cars for transport of aggregate.

The hopper-bottom cars known so far are discharged to the intertrack space, they are provided with at least one pair of swivel-mounted flaps on both sides of a longitudinal beam in the car body supporting structure. The longitudinal beam is placed in a symmetry plane of the chassis frame. Flap flanks are pivotally attached to the car body that ends at the bottom with a discharge hopper. Flaps are driven by two pneumatic actuators, one on each side with a pair of flaps. A cylinder base of each actuator is attached through a flat articulated joint to one flap, and the end of a piston rod is attached to another flap through a pin which is fit loose in an eye of a catch that is attached to this flap. A hook provided with a compression spring is mounted to the cylinder body on front side. Flanks of flaps are connected to each other through synchronous couplers. One articulated joint is mounted below the axis of rotation of one flap, and the other joint - below the axis of rotation of the second flap. When the flaps are closed, the hooks, which are components of pneumatic cylinders, are in mesh with catches of the second flap. In the base part of each hook there is a disc that is in contact with a cam formed in the catch jig. Flaps are locked in a closed position by a locking unit composed of a transverse shaft provided with cam locks for preventing from opening the flaps. When in closed position, the cam locks stay in rectangular slots made in flap flanks. Turning the transverse shaft manually or using the pneumatic actuator, effects in retracting the cam locks.

In initial phase of the piston rod movement, within the clearance range of the head-mounting pin, the hook moves up over the cam flank and gets meshed off the catch; all that takes place under elevated working pressure in cylinders.

According to the invention, the entire air-operated unloading mechanism of discharge flaps in hopper-bottom cars - provided with a pair of flaps closing a hopper hole, synchronous couplers to connect the flap flanks, pneumatic actuators for driving the flaps, catches attached to the left flap, hooks mounted to actuator cylinders, and a locking unit to secure the flaps in closed position - is characterized in that the left flap is provided with a longitudinal shaft ending in levers that are connected to heads of piston rods of the actuator on each side of a flap, where at the end of each lever there is a disc, which is mating with comb flank of a hook cam. In addition, a lever arm is placed between left and right stoppers, which are part of the left flap.

In the preferable version of the mechanism, there is a bean-like hole in each lever near its free end, where the pin of the head of the cylinder piston rod is fit in; the stoppers are fixed to edges of the hole made in the bottom panel of the left flap, and the lever arm passes through this hole.

In the solution according to the invention, the longitudinal shaft with levers, and with discs at its end, provides for simultaneous operation of both cylinders, thus minimizing the cylinder pressures, necessary to mesh off the hooks; owing to this, the control of the flap closing action can be carried out smoothly, also it is possible to control the goods volume flow rate when unloading the cars. By mounting the piston rod head in the bean-like hole made in the lever of the longitudinal shaft, elimination of shearing forces on piston rods is obtained, and thereby the working life of the actuator can be extended.

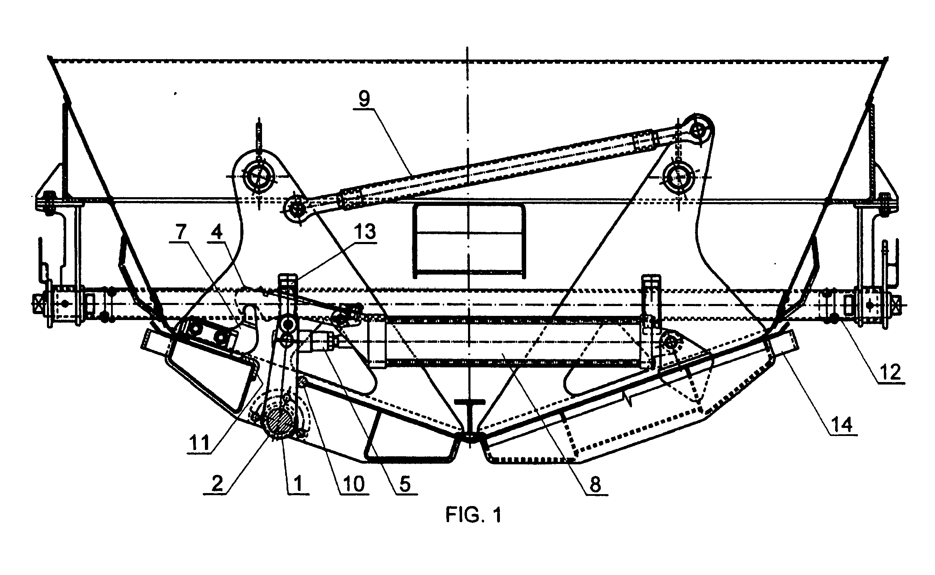

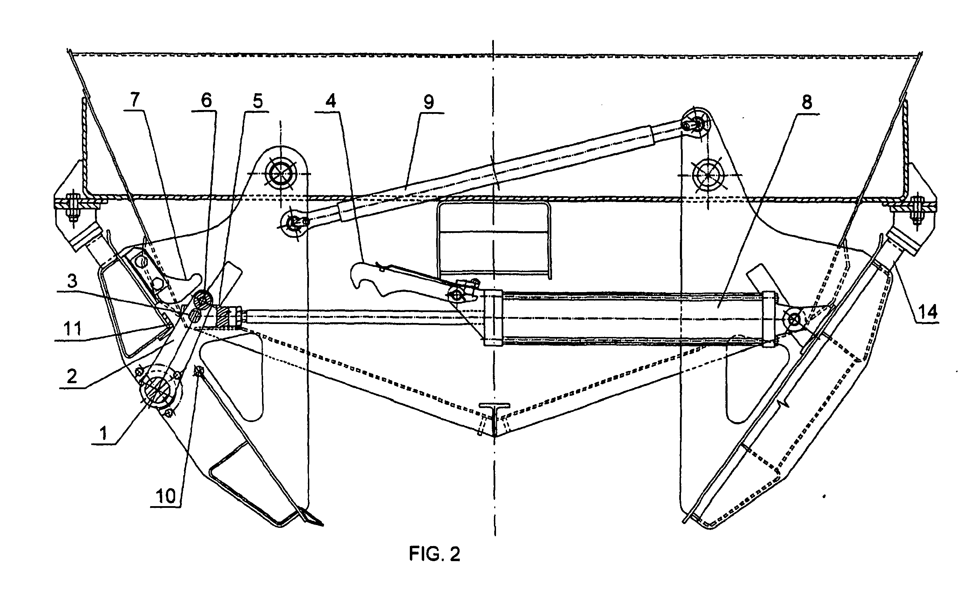

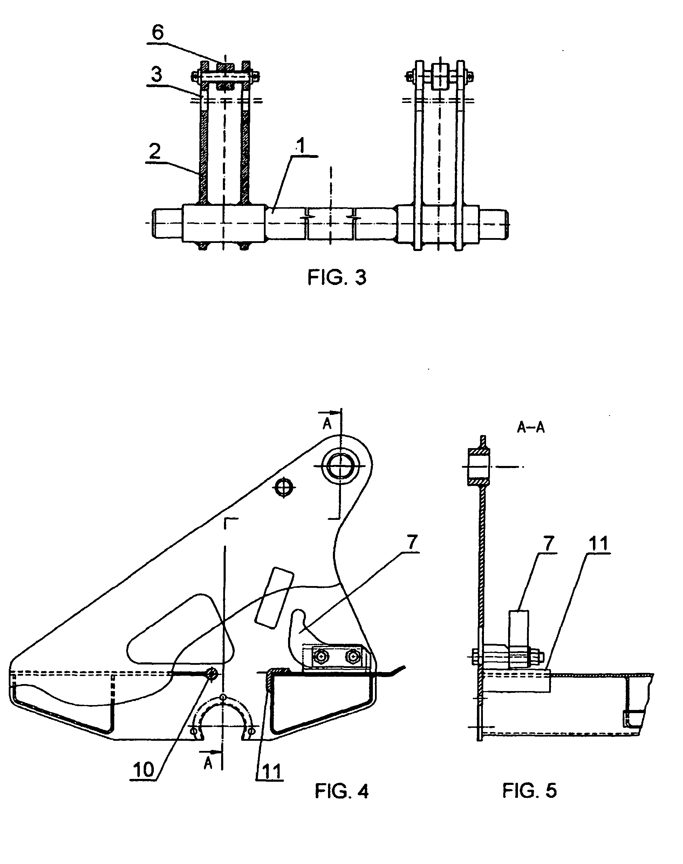

The object of the invention has been represented as an exemplary solution in figures 1 to 5. Flaps with the unloading mechanism in closed position are shown in Fig. 1, viewed from the front; Fig. 2 - Flaps with the flap opening mechanism in open position, front view; Fig.3 - Longitudinal shaft with a lever, side view; Fig. 4 -Broken-out cross-section of the left flap, rear view; Fig. 5 - Fragmentary view of the left flap in the A-A cross-section as in Fig. 4.

When flaps are in closed position, as shown in Fig. 1, the hopper bottom holes on both sides of the car longitudinal beam are closed. Flanks of flaps are swivel-mounted to walls of the car body supporting structure. One pair of flaps, consisting of a left flap and a right flap, is provided with two pneumatic actuators, which have cylinders **8** attached to the right flap. Hooks **4** being the part of the air cylinders **8** are in mesh with catches **7** attached to the left flap. Flat springs adhere to the hooks **4** in the upper part of the hooks. The springs force the hooks in a snap mesh with catches **7.** A longitudinal shaft **1,** ended with levers **2** is mounted in the base part of the left flap. Stoppers that are part of the bottom panel of the left flap limit rotation of the lever **2.** In the closing position the arm of the lever **2** rests on the right-side stopper made of a bar, and in the opening position the lever arm rests on the left-side stopper **11,** made of an angle section. A bean-like hole **3** is made in each of levers **2,** near its free end, and the pin that serves to mount the head 5 of the cylinder piston rod, is fit therein. Bean-like holes that are above the hole in the bottom flank of the left flap, which lets the arm of the lever **2** through, connect the lever **2** to the heads **5** of the cylinder **8** piston rods. Owing to this type connection, occurrence of shearing forces on piston rods during the action of closing and opening flaps is eliminated. At the ends of the levers **2,** above the bean-like holes, there are discs **6** mating with a suitably shaped flank of the cam, over which hooks **4** move. Range of rotation of the lever **2** corresponds to the cylinder piston rod travel, necessary to mesh the hooks **4** off the catches **7.** Both flaps are connected to each other through a synchronous coupler **9.** The coupler is attached to the right flap, above the axis of rotation of this flap, and to the left flap - below its axis of rotation. A locking unit for securing a pair of flaps in closed position consists of a transverse shaft **12** provided with cam locks **13** that mesh in rectangular slots made in flap flanks. While meshing in the rectangular slot in the left flap, the cam lock **13** at the same time locks the hook **4** in its bottom position, thus preventing it from being lifted and meshed off the catch **7.** Rotation of the transverse shaft **12** is performed by a side pneumatic actuator of the locking unit, attached to the side car frame, or manually, using a lever type mechanism attached at the end of the transverse shaft **12.**

As presented in Fig. 2, the flaps in open position are pulled away from the longitudinal beam, and the stoppers **14** that are located on outside panel of each flap, touch the stoppers fixed to the side car-frame. On unlocking the flaps, the piston rods of cylinders **8** retract, which effects in lifting the hooks **4** on the disc **6** placed at the end of the lever **2.** Then the hooks **4** disengage from catches **7.** Further movement of the piston rod results in that the lever **2** rests on the left stopper **11,** and the flap is turning until the stopper **14** touches the stopper at the side car-frame. Through the longitudinal shaft **1,** hooks **4** are disengaged at the same time on both sides of the pair of flaps. The synchronous coupler **9** makes that both flaps are lifted simultaneously. Mutual position of a beam-like hole and a disc **6** on the lever **2** of the longitudinal shaft **1** has been shown in Fig. 3. Position of stoppers **10** (right stopper) and **11** (left one) against the catch **7** and the hub of the longitudinal shaft 1 have been shown in Fig. 4. In Fig. 5 there has been shown an attachment of the catch **7** and the left stopper **11** to the flank of the left flap, and also an extra reinforcement of the longitudinal shaft **1** mounted to a section that is stiffening the bottom panel of the flap. Stoppers are welded to edges of the hole made in the bottom panel of the flap and used as a through-hole for the lever **2;** the catch **7** together with control components, is screwed to the panel of the left flap. Stoppers in the left flat are arranged so as to provide for correct kinematics of the system, both when opening and closing the flaps.

In the solution according to the invention, the longitudinal shaft **1** together with levers **2** ended with discs **6** assures that the air pressure in cylinders, necessary to effect the disengagement of hooks **4,** is minimized, owing to which also the control of the goods volume flow rate is possible when unloading the cars.

The solution can be used in four-wheel cars as well as in cars having more than two axles; in cars having boxes provided with a bottom hopper for gravity unloading of loose materials. In case that a car box is provided with more than one pair of flaps, the pneumatic actuator of one pair of flaps can be coupled with the adjacent pair of flaps.

## Claims

1. The air-operated unloading mechanism of discharge flaps in a hopper-bottom car, provided with a pair of flaps closing a hopper hole, synchronous couplers to connect the flap flanks, pneumatic actuators for driving the flaps, catches attached to the left flap, hooks mounted to actuator cylinders, and a locking unit to secure the flaps in closed position, **characterized in that** the left flap is provided with a longitudinal shaft (1) ending in levers (2) that are connected to heads (5) of piston rods of the actuator on each side of the flap, where at the end of each lever (2) there is a disc (6), which is mating with a comb flank of a hook (4) cam, while an arm of the lever (2) is placed between left (11) and right (10) stoppers, which are part of the left flap.

2. The mechanism according to the claim 1, **characterized in that** there is a bean-like hole (3) in each lever (2) near its free end, where the pin of the head (5) of the cylinder piston rod is fit in.

3. The mechanism according to the claim 1, **characterized in that** the stoppers are fixed to edges of the hole made in the bottom panel of the left flap, and the arm of the lever (2) passes through this hole.
